# EUROPEAN PATENT APPLICATION

(11) **EP 1 193 634 A2**
(43) Date of publication of application: **03.04.2002**
(21) Application number: 01308016.3
(22) Date of filing: 20.09.2001
(51) Int. Cl.: G06F 17/60, G06F 17/50

(54) **Design support system capable of reducing design error**

(30) Priority: 20.09.2000 JP 2000284826
(71) Applicant: Sumitomo Rubber Industries Ltd., Kobe-shi, Hyogo-ken (JP)
(72) Inventor: Kozono, Yasufumi, c/o Sumitomo Rubber Ind., Ltd., Kobe-shi, Hyogo (JP); Tanaka, Yoshimichi, c/o Sumitomo Rubber Ind., Ltd., Kobe-shi, Hyogo (JP); Noiri, Hiroshi, c/o Sumitomo Rubber Ind., Ltd., Kobe-shi, Hyogo (JP); Imamatsu, Takeshi, c/o Sumitomo Rubber Ind., Ltd., Kobe-shi, Hyogo (JP)
(74) Representative: Frost, Alex John

(57) **Abstract**

A design support system is constituted for a user to design a construction material (a fender or the like) and to obtain the result of the designing through connection to a wave server. The system includes a database (F4) performing calculation and output based on data entered by the user, and storing the process thereof. The calculation result can be obtained by the user by e.g. downloading (S117, S217), and also is recorded into the database (F4). A person on a maker side, different from the user, may refer to the database (F4) in order to check a design error.

## Description

### BACKGROUND OF THE INVENTION

### Field of the Invention

The present invention relates to a design support system, and particularly, to a design support system giving design support to a user for specifications and types of construction materials required by the user, such that the user can make a selection.

### Description of the Background Art

There are different construction materials for industries such as construction, civil engineering or marine, in accordance with various conditions. In addition, in selection of such materials, technical calculation and consideration are often required, which are performed by the user and a material-supplying maker working together.

Conventionally, in selecting designs of civil engineering-, marine- or construction-related materials and so forth, a customer (a designer), i.e. a user, has calculated performance required for the materials based on various specifications and standards, and selected their materials having performance satisfying the required performance based on performance described in catalogs issued by makers.

Moreover, makers have compiled such a procedure into design manuals, and distributed through customers in a form of a booklet or a CD-ROM, to give design support.

As a typical example, when a user selects a fender, the designing procedure described below has conventionally been used.
(1) Types and specifications and so forth offenders are described in a catalog offenders distributed by a maker. Considering working conditions, the user must obtain a required amount of energy absorption and so forth, to decide which one to order from the catalog.
(2) Thus, the maker provides the user with a calculation manual to be used for calculating, mainly, approaching energy of a vessel approaching a wharf. The approaching energy of the vessel will be absorption energy to be absorbed by a fender.
(3) According to the manual, the user calculates various coefficients from conditions such as the size and speed of the approaching vessel, to obtain the approaching energy. Then, considering the load to the wharf, the user selects a fender that is appropriate to absorb the approaching energy from various types of fenders, and places an order for the selected one with the maker.
(4) Some users may entrust a designer in the construction field to perform (3) indicated above. The user or designer may present the conditions and data related to the vessel and so forth to the maker and request the maker to perform the calculation.

However, the conventional designing procedure described above had a problem in that a material selected by the user who misunderstood the contents of the design manual may be used. Furthermore, when the user put a query to the maker about unclear points of the designing procedure or the performance described in the catalog, a time lag is generated between the query and the reply thereto.

Furthermore, when the performance or designing procedure of a fender is changed, it is required to revise the contents of already-distributed manuals, catalogs, booklets and CD-ROM to report the change. However, it is almost impossible to keep track of all the distributions, so that the designing may be performed in accordance with old performance and old designing procedure, possibly causing a problem.

### SUMMARY OF THE INVENTION

The present invention was made to solve the problems described above, and to provide a design support system that can reduce design error.

According to an aspect of the present invention, a design support system, which is constituted for a user to design a construction material and to obtain a result of the designing through connection to a web server, includes a database performing calculation and output based on data entered by the user and storing a process of the calculation and the output, and while the user can obtain a result of the calculation, a person different from the user can check the designing by referring to the database.

Preferably, the design support system includes a function of automatically creating a drawing for a product or a system, from the data entered by the user or the result calculated from the data.

Preferably, the design support system includes a function of gathering and managing customer information entered by the user.

Preferably, the design support system includes a function of managing a condition for designing and a result of designing in a database on a system side.

Preferably, the design support system includes a function capable of, when a revision is made to a designing procedure and other processes, specifying and notifying a user who performed a designing affected by the revision.

Preferably, the design support system performs authentication for whether or not a connection is allowed to a database server capable of providing information related to performance of a material and a design selecting procedure, based on individual information entered by the user.

Preferably, the design support system charges the user in accordance with connection time of the user to the system.

Preferably, the design support system discriminates between a user to be charged and a user not to be charged.

Preferably, the construction material includes a fender, and the design support system displays a list of selectable products based on a calculation result of an amount of energy absorption and a reaction force, and provides a selection process report and a drawing of a performance characteristic for a specific type selected from the list.

In another aspect of the invention, there is provided a method of designing a construction material comprising entering, at a first, local terminal, data relating to the said construction material; transmitting the input data to a second, remote database; processing the said data at the database; transmitting the processed data back to the local terminal; and storing the processed data at the database so as to allow the processed data to be checked at a third terminal remote from the first terminal and the database.

The invention also extends to a method of processing construction material data at a database wherein the data is processed, stored and also sent to one or more separate remote users.

A computer program configured, when executed, to carry out such methods is also contemplated, as is a computer storage device upon which is stored such a program. In addition, an electronic signal carrying the data (processed or input) is provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows the configuration of a design support system according to an embodiment of the present invention;
Fig. 2 shows the configuration of a web page for the design support system;
Fig. 3 is a flow chart showing the process of supporting designing of a fender;
Fig. 4 shows an initial screen of a web page for fenders;
Fig. 5 shows the screen for entering a user ID and a password;
Fig. 6 shows the screen for user registration;
Fig. 7 shows (the top half of) the screen for entering conditions for designing of the fender;
Fig. 8 shows (the bottom half of) the screen for entering conditions for designing of the fender;
Fig. 9 shows the screen (a sub menu) for selecting a vessel;
Fig. 10 shows the screen for displaying and selecting candidate fenders;

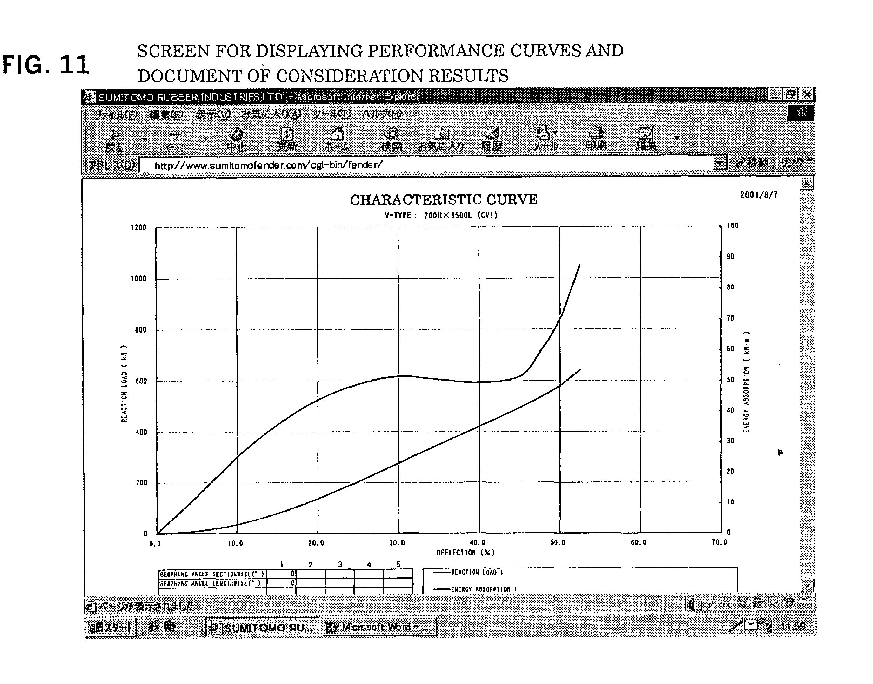

Fig. 11 shows the screen for displaying performance curves and a document of consideration results;
Fig. 12 shows the screen for displaying a system illustration and for entering parameters;
Fig. 13 shows the screen for selecting an accessory (chain); and
Fig. 14 shows the screen for displaying a drawing of a fender.

### DESCRIPTION OF THE PREFERRED EMBODIMENT

A design support system according to one embodiment of the present invention will be described below in detail with reference to the drawings.

The design support system according to the present embodiment is equipped with a database server that discloses the performance of materials and the procedure for selecting a design via the Internet, such that the user can select a material satisfying a required performance only by entering conditions for designing. Moreover, the database server is provided with a function of managing the process and result of designing.

The user can obtain the result of designing selection in real time, irrespective of locations, by accessing the database server via the Internet. Furthermore, a person different from the user, e.g. a person on the material-supplying maker side, can check the process and result of the design recorded in the database server to determine if there is a design error. In addition, when a problem is found, the user can be notified of the problem in real time by a notification means such as an electronic mail. This eliminates the need for data management on the user side.

Furthermore, when there is a change in the material performance or the designing procedure, the maker only needs to change the data within the database server. Such a change can be made in real time, so that every user can be notified of the change all at once.

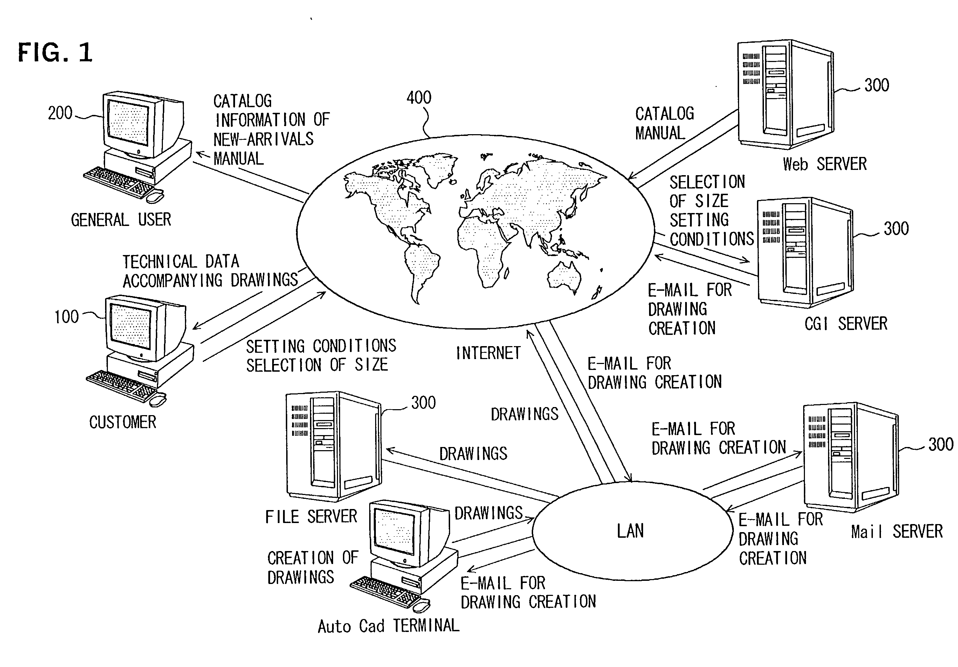

Fig. 1 shows the configuration of the design support system according to one embodiment of the present invention.

Referring to Fig. 1, the design support system is constituted by customers' (users') computers 100, 200 and a server 300. Each of computers 100, 200 is connected to server 300 by a telecommunication network such as Internet 400.

Users can receive catalogs, information of new arrivals, manuals of construction materials and so forth from server 300 by utilizing respective computers 100, 200.

Moreover, when a user enters conditions for designing, size and so forth of a construction material and transmits the entry to server 300, technical data of materials matching the conditions and size (or information related to the material performance and the design-selecting procedure) and accompanying drawings are sent from server 300 to the user's computers 100, 200. Thus, design support is given to the user.

It is noted that a charge may be made in accordance with the connect time of the user to the server, or the connection may be free of charge.

Furthermore, users to be charged and users not to be charged may be discriminated from each other by user ID and passwords.

Specifically, the processes described below will be performed in the design support.

First, the user enters conditions required for designing by using computer 100 or 200, and transmits the entry to server 300.

In accordance with the condition, server 300 performs the processes of (a) to (f) below.

### (a) Determination of features of an object vessel (length overall, length between perpendiculars, breadth, draft, displacement, and so forth)

If the information entered by the user is insufficient by itself, the process of calculating or extracting a necessary numeric value from the database (data determined by a statistical process or the like) is performed based on the entered information.

### (b) Determination of a coefficient of eccentricity, a coefficient of virtual mass, a coefficient of flexibility, and a shape factor of berth

Here, the process of calculating or extracting a necessary numeric value from the database is performed based on the information entered by the user.

### (c) Determination of approaching velocity

If approaching velocity was not entered by the user, a necessary numeric value is extracted from the database.

### (d) The process of calculating approaching energy of a vessel from the numeric values of (a) and (b) indicated above, based on a kinematic method

### (e) Selection of fender size

A fender and/or the size thereof are selected that can absorb the approaching energy of the selected vessel. Here, an appropriate fender and the size thereof are selected from the database in which the performance of various types and various sizes of fenders are stored.

### (f) Selection of accessory

The size and so forth of an accessory (anchor bolt, shock-absorbing board, chain or the like) to be attached to the selected fender is selected from the database.

The results of calculation and selection described above are transmitted to the user's computer 100 or 200. The user can view the selection result in real time, represented as technical data and drawings.

Moreover, the process through the user entry, calculation and output is stored in the database server. The person on the fender maker side or the like checks the conditions entered by the user, and the process and result of the selection from the database server. If there has been a problem such as a design error, the user is notified of the problem by an electronic mail (hereinafter also referred to as E-mail) or the like.

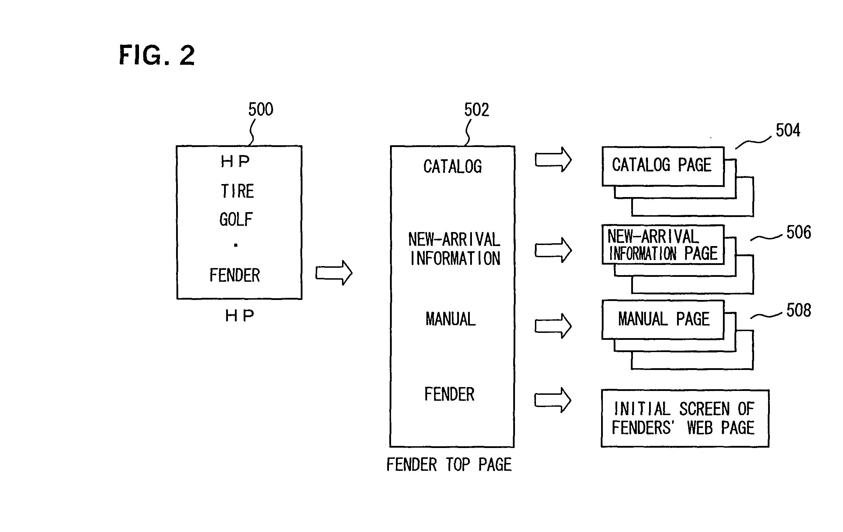

Fig. 2 shows the configuration of a web page offered by server 300 to the user via Internet 400.

When the user accesses server 300, first, the screen for entering the field of product lines of the maker (top page) 500 is displayed. Server 300 can transfer documents written in HTML (Hypertext Markup Language) as data in a web page by HTTP (Hypertext Transfer Protocol). The product lines are displayed in a menu form of hyperlinks. Here, "fender" (one of industrial materials) is displayed as one of the product lines. When the user clicks the part indicating "fender," the screen is jumped to a "fender" top page 502.

In "fender" top page 502, hyperlinks for a catalog, new-arrival information, manuals and so forth, and a hyperlink for making the transition to the URL for designing of a fender (for example "fender designing") are displayed. The user selects a desired one among the ones described above, transition is made to a catalog page 504, a new-arrival information page 506, a manual page 508, or the initial screen of the web page for fenders, in accordance with selection of the user.

Catalog page 504 is for providing the catalog of fenders on the Web, which were conventionally distributed in hardcopies, to send out information thereof. A new-arrival information page 506 is for timely releasing up-to-date information related to fenders without a time lag. Further, manual page 508 is for providing the manuals offenders for anyone to easily obtain the manuals.

It is noted that, while catalog page 504, new-arrival information page 506 and manual page 508 may be provided open to all users, the web page related to designing such as the initial screen of the fender's web page may be protected by a password or the like.

The process subsequent to the display of the initial screen of the fenders' web page is now described.

In this web page, a designing program of a fender is executed. The program is written in the PERL (Practical Extraction and Report Language) that exchanges information in the CGI (Computer Graphics Interface) format.

In the fender's web page, first, the initial screen is displayed, which urges the user to enter a user ID and a password. The initial screen instructs the user who has no user ID/password to perform user registration, and when the user registration is completed, the process of generating a password is executed.

Further, information such as the generated user ID and password are transmitted to an E-mail address of the user. The data of the user is stored into a user management file, and utilized for user registration, query and so forth.

When the connection is made to the designing program, the screen for entering predetermined condition data is displayed, urging the user to enter the data. When the predetermined data is entered, data for calculation is read from a "master file for fender management" in which original data for calculation of various coefficients and so forth are stored. Then, the process of calculating, e.g. a reaction force or an amount of energy absorption is performed.

Furthermore, when instructions are given by the user that the process should be performed in the state where only a part of to-be-entered data has been entered but the other parts thereof have not been entered, a calculation program is executed calculating the other features based on the part of entered data. The program performs a calculation process for not-yet-entered data.

After the calculation process, the data as described below are displayed on the screen of the user's computer.
- Data of vessel features or the like entered and used for calculation (or the part of the entered data and the added feature data)
- Calculation results of the amount of energy of an approaching vessel and the reaction force of a wharf (berth)
- A list of types, sizes and characteristics offenders satisfying conditions for absorbing the energy (candidate fenders)
   The user selects a desired one from the displayed candidate fenders. It is noted that the choice may be one or more than one. The data indicated below will be displayed for the selected fender(s).
- A process report up to the selection, including entry data, the process and result of calculation, and so forth
- Illustration of the energy-distortion curve and the reaction force-distortion curve of the selected fender

Then, a program for designing and illustrating how to attach the selected fender to a wharf is activated, and data such as drawings obtained as a result is output to the user's computer.

Such process information in the selection, including entry data, the process and result of calculation and so forth, are all stored into a user entry/output data management file within the server.

The person on the maker side can refer to and check the data stored in the user entry/output data management file, using a spreadsheet software or the like. If a problem such as an selection error due to misunderstanding of the user or a data entry error is found by the check, the user is informed of the problem through an electronic mail or the like immediately. This can catch the user's attention, and can also urge the user to correct data.

Before the server become saturated by the stored data, a manager of the database manages data by e.g. extending the server, saving data in CD-R, or deleting unnecessary portions. Moreover, the process of updating the master file for management is also performed if the data is updated resulting from market trend, law regulation, debut of a new product, and so forth.

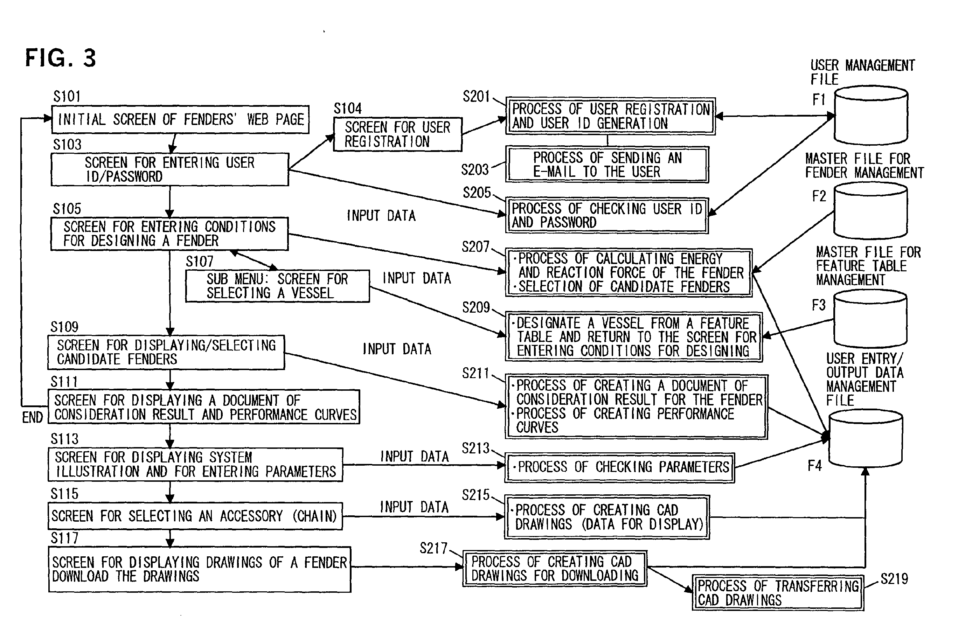

Fig. 3 is a flow chart showing the process of server 300 (the process of supporting designing of fenders) performed after the initial screen of the web page for fenders is displayed.

Server 300 includes a user management file F1 for managing the ID and password of the user, a master file for fender management F2 storing data to be required for selecting a fender, a master file for feature table management F3 recording various features, a user entry/output data management file F4 managing user entry and the process and output result of calculation. In the fender's web page, the processes of storing data into these files and performing calculation based on the extracted data are executed.

It is noted that the flow chart shown on the leftmost side in Fig. 3 illustrates transition of the screen displayed on the user's computer, and the portions enclosed by double lines in the middle of Fig. 3 illustrate the processes performed by the server.

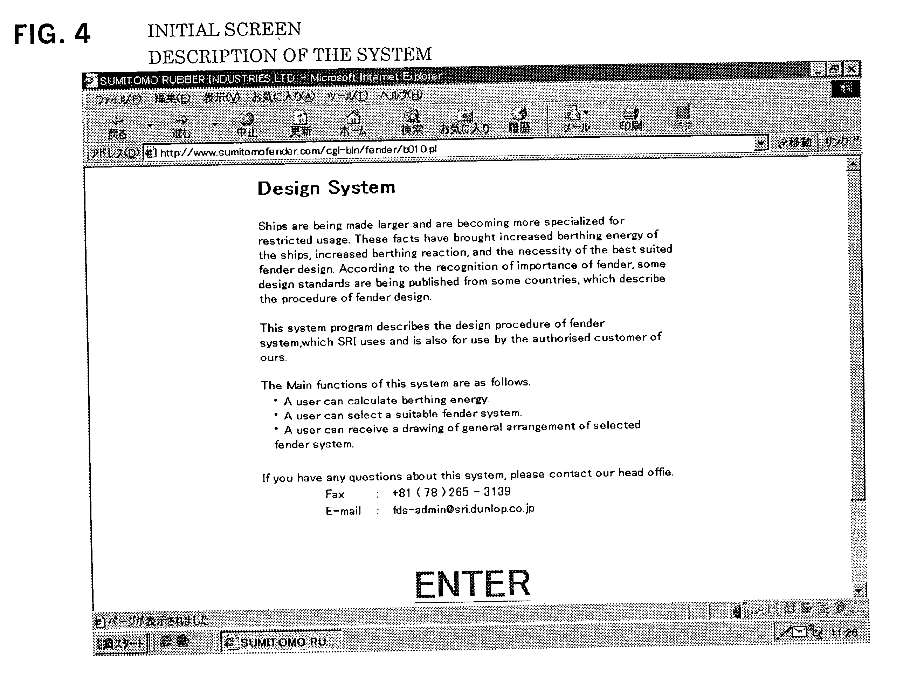

Referring to Fig. 3, in the process of supporting designing of a fender, first, the initial screen of the web page for fenders (see Fig. 4) is displayed at step S101. On this screen, for example, the description of the design support system is displayed.

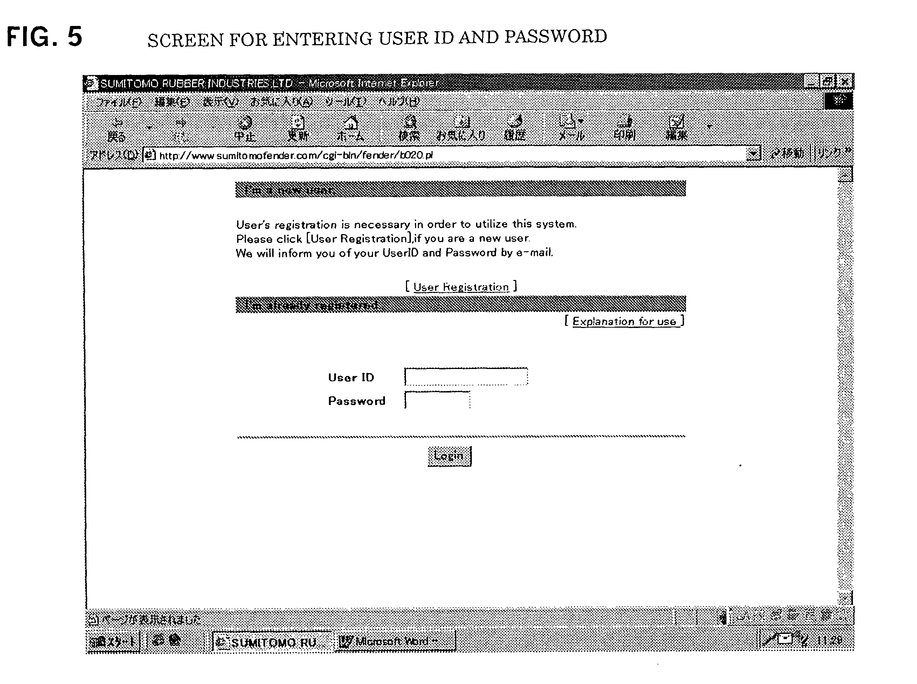

Subsequently, at step S103, the screen for entering a user ID and a password (Fig. 5) is displayed. On this screen, a user ID and a password are entered such that only the registered users can browse designing information (information related to the performance of materials and the design-selecting procedure).

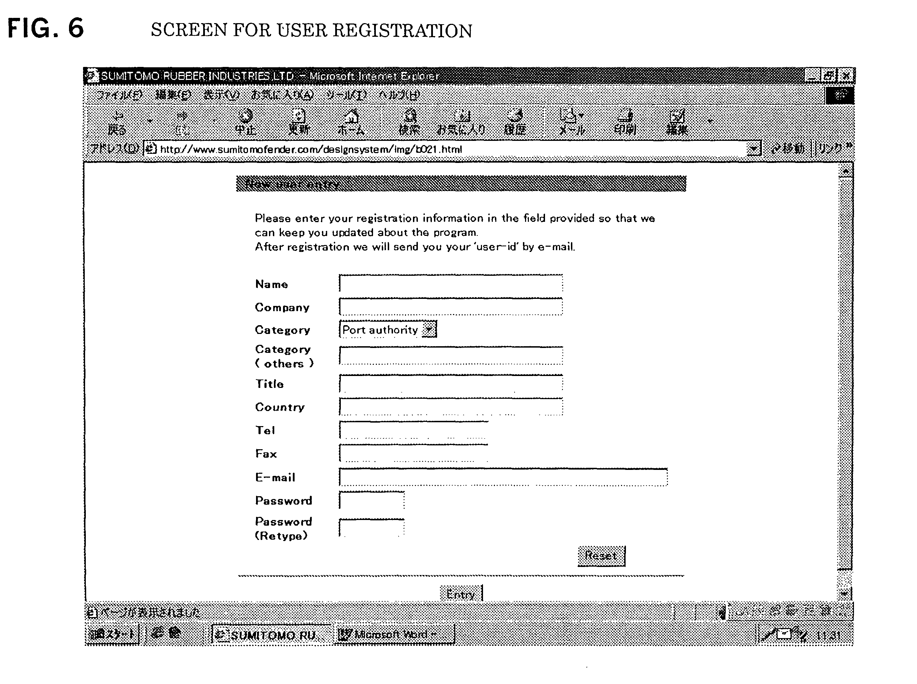

Furthermore, a new user can be registered from the screen shown in Fig. 5, in which case the process goes on to step S104 in Fig. 3, and the screen for user registration (Fig. 6) is displayed. On this screen, the user enters information such as an initial password, an E-mail address, name, an address and a telephone number. When the registration of the new user is completed, determined user ID and password are transmitted to the user's computer by an E-mail.

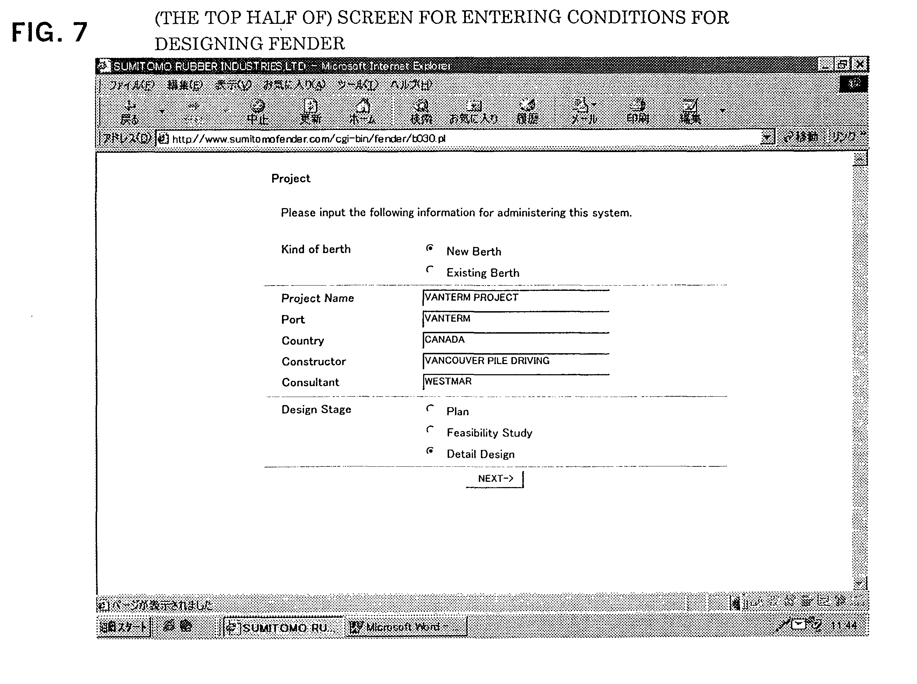

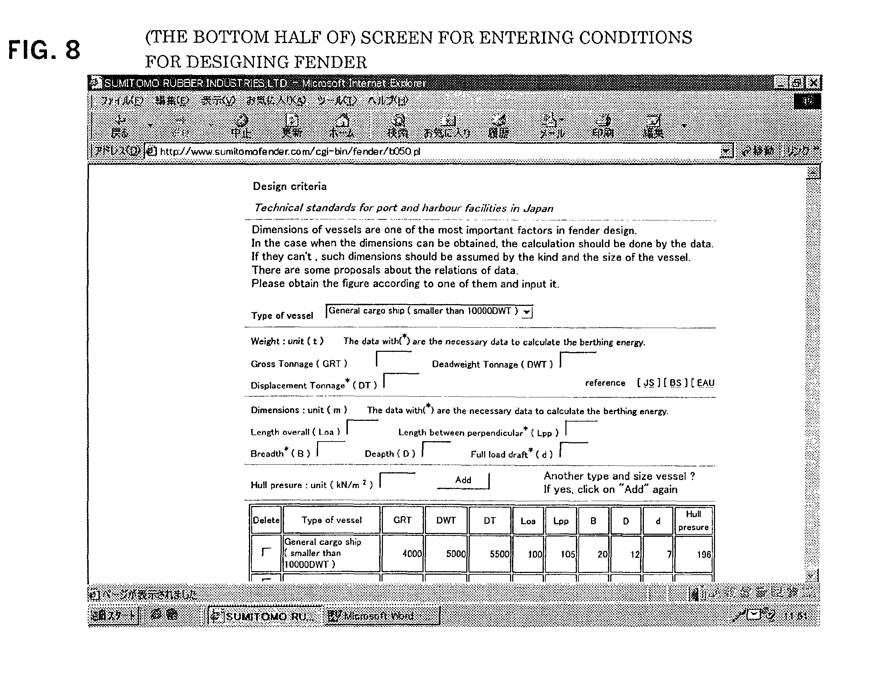

If the user ID and password are valid at step S103 in Fig. 3, the screen for entering conditions for designing a fender (Figs. 7 and 8) is displayed at step S105. On the screen for entering the conditions for designing of the fender, the user enters various design conditions required for determining the fender to be used. For example, the type of the vessel, the size (deadweight, length overall, breadth) of the vessel, and approaching conditions (approaching velocity, angle, attachment interval of fenders, attachment method, the type of wharf, and so forth) are entered.

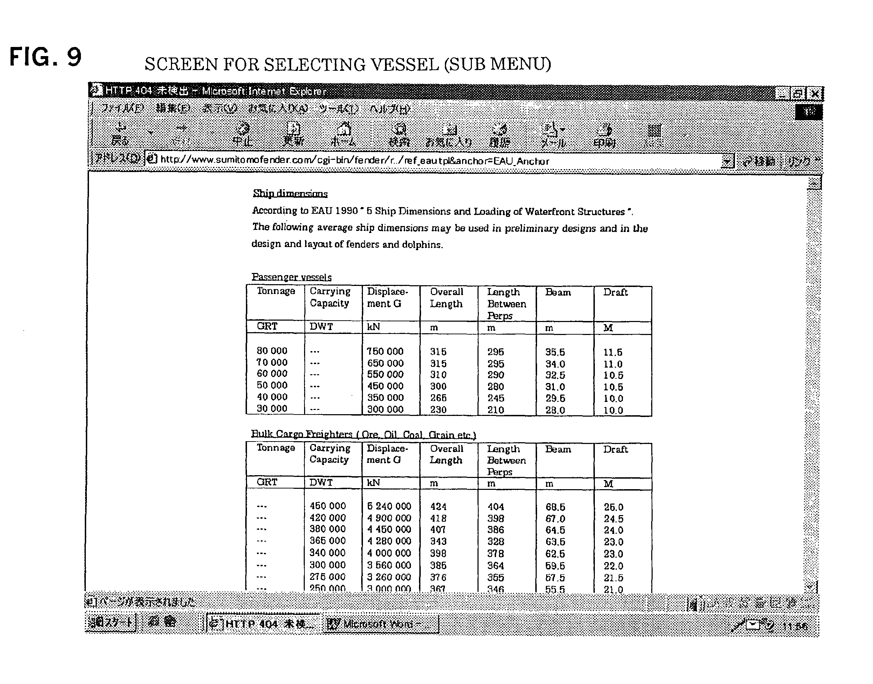

The process moves on to step S107 in Fig. 3 by user's selection, and the screen for selecting a vessel (Fig. 9), i.e., a submenu, is displayed. On this screen, the user can select the type of the vessel based on master file for feature table management F3. When the selection is made, the screen goes back to the screen for entering conditions for designing of the fender, where the selected conditions are reflected.

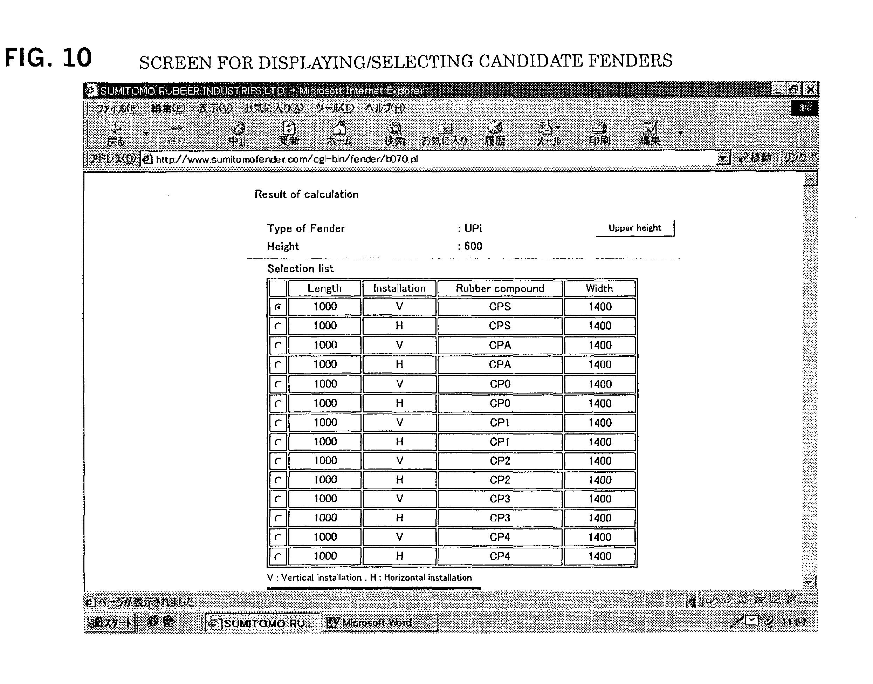

When the entry of conditions for designing is completed, the process moves on to step S109 in Fig. 3, and the screen for showing and selecting candidate fenders (Fig. 10) is displayed. On this screen, candidate fenders that meet the conditions are shown as a list, for the user to select the fender to be used.

When the selection is completed, at step S111, the screen for displaying a document of consideration results and performance curves is displayed. On this screen, the performance curves and the consideration results for the selected fender (a single unit of fender or two perpendicular rows of fenders may be targeted) are displayed.

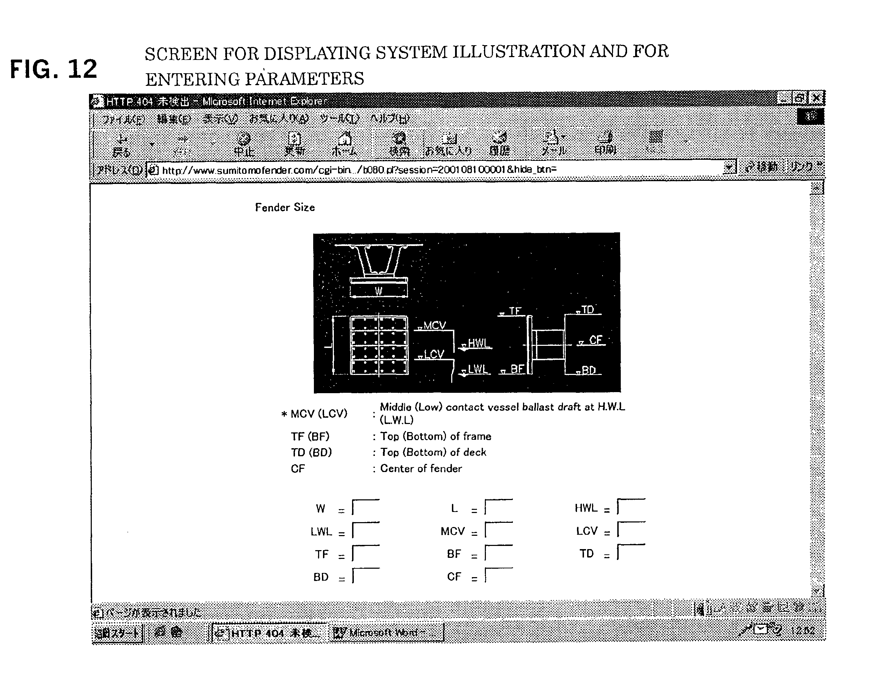

At step S113 in Fig. 3, the screen for displaying system illustration and for entering parameters (Fig. 12) is displayed. On this screen, an illustration of the system for the selected fender is displayed, and the parameters required for creating drawings are entered.

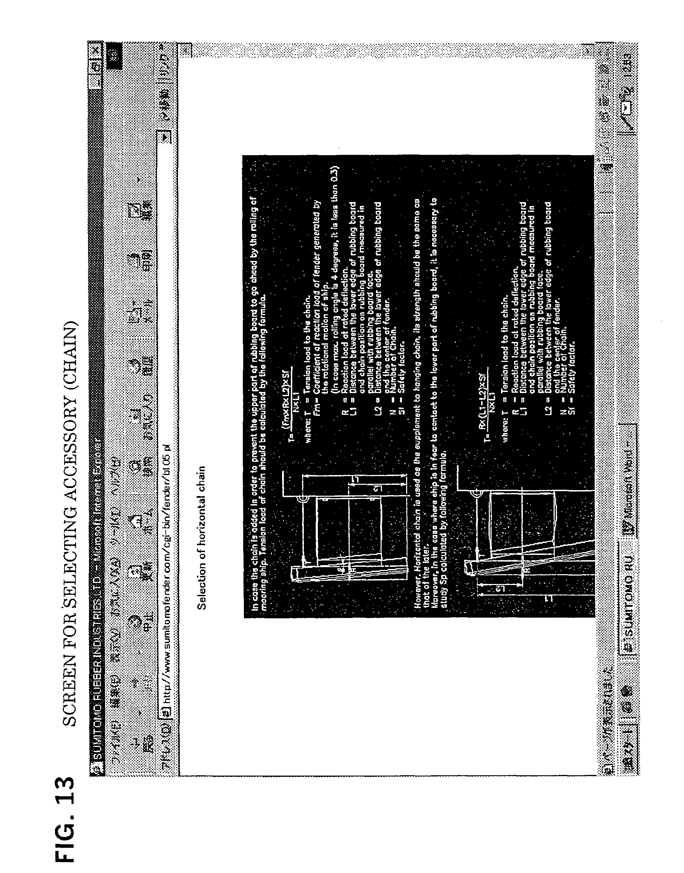

Subsequently, at step S115 in Fig. 3, the screen for selecting an accessory (chain or the like) (Fig. 13) is displayed. This screen, when a chain or the like is to be used as an accessory, instructs the user to enter the size, material and so forth of the accessory, to perform calculation of intensity, and to add the information of the accessory to CAD (Computer-Aided Design) drawings.

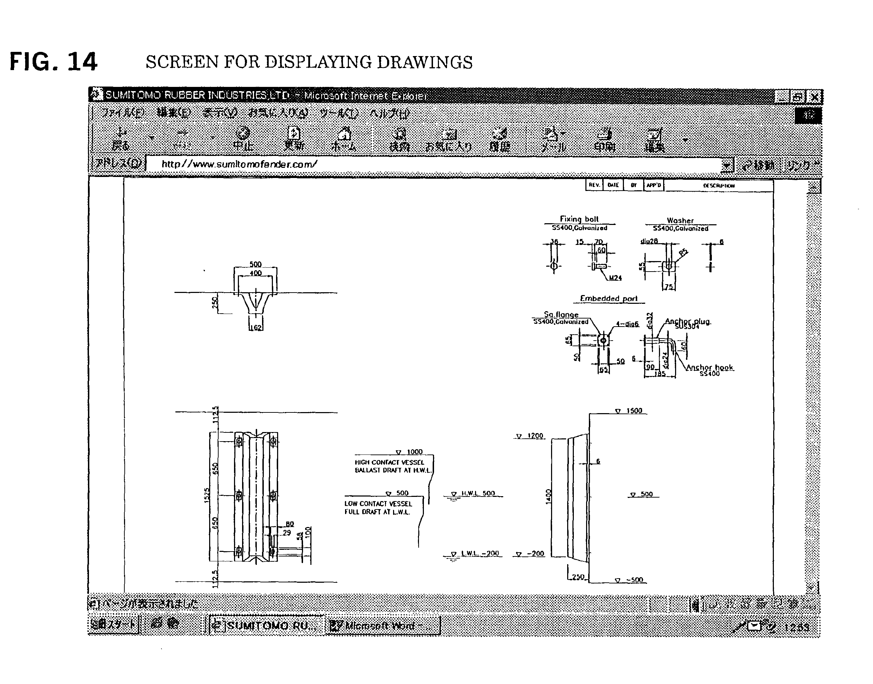

Thereafter, at step S117 in Fig. 3, the screen for displaying drawings of the fender (Fig. 14) is displayed. Then, the created CAD drawings of the fender is downloaded to the user's computer.

Next, the processes performed in the server will be described with reference to Fig. 3.

When a new user is registered on the screen for user registration, the server performs the processes for user registration and user ID generation at step S201. Then, information related to the user is registered into user management file F1. When the registration is completed, at step S203, the process of transmitting an electronic mail to the user is performed.

If a user ID and a password are entered on the screen for user ID/password entry, a checkup is performed at step S205 between the entered data and the data stored in user management file F1.

When conditions for designing of the fender are entered, the entered data is transmitted to the server, and the process of calculating energy and reaction force of the fender is performed at step S207. Selection of fenders to be candidates is also performed, based on the data in master file for fender management F2. The entered data, the process of calculation and the result of selection are stored into user entry/output data management file F4.

Furthermore, when a vessel is selected on the screen for vessel selection, at step S209, data is extracted based on a feature table in reference to master file for feature table management F3, and the process of returning to the screen for entering conditions for designing is performed.

If the user selects a desired one from the candidate fenders, at step S211, the process of creating a document of consideration results for that fender is performed, and performance curves are also created simultaneously therewith. The created consideration document and the performance curves are stored into user entry/output data management file F4.

When the system illustration is displayed and the parameters based thereon are entered by the user, the parameters are checked at step S213, and the result of the check as well as the parameters are stored into user entry/output data management file F4.

Furthermore, if an accessory (a chain or the like) is selected, the process of creating a CAD drawing is performed at step S215. The created data is stored into user entry/output data management file F4.

When the selection of the fender and accessory is completed and all the parameters are entered, the CAD drawing for downloading is created at step S217, and then the processes of storing the created data into user entry/output data management file F4 and of transferring the drawing to the user's computer are simultaneously performed (S219).

As described above, in the present embodiment, the user can select an appropriate fender and obtain a design drawing only by answering a questionnaire sent from the server. Moreover, the process of the selection is all stored into user entry/output data management file F4, so that a person of a maker can check the contents thereof in order to recognize errors and to notify the user thereof.

Though selection of the fender and its accessory was described in the present embodiment, the present invention may be applied to selection of other materials used in civil engineering, marine, construction and so forth.

It is noted that the process shown in the flow chart in Fig. 3 may be performed by a software or by a hardware circuit.

In addition, a program executing the processes shown in the flow chart in Fig. 3 may be provided by e.g. downloading, or may be provided to the user by recording the program into a recording medium such as a CD-ROM, a diskette, a hard disk, a ROM (Read-Only Memory), a RAM (Random-Access Memory), a memory card or the like.

Moreover, as described above, drawings of the product or system can preferably be created automatically from the data entered by the user or the result calculated from the data, to simplify the work of the user. Furthermore, the system may preferably be provided with a function of gathering and managing customer information (address, name, telephone number, E-mail address or the like) entered by the user (at the time of connection), to save the trouble of customer management.

In addition, if the data base on the system side has a function of managing conditions for designing and results of designing, the need for data management by the user can be eliminated.

Furthermore, in the design support system, when the designing procedures or the other processes are revised and the revision affects designing such that the contents thereof are changed, the user performed the designing may preferably be specified to be notified of the revision.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A design support system constituted for a user to design a construction material and to obtain a result of the designing through connection to a web server, comprising:
a database performing calculation and output based on data entered by said user, and storing a process of the calculation and the output,
wherein said user can obtain a result of the calculation, and a person different from said user can check the designing by referring to said database.

2. The design support system according to claim 1, comprising a function of automatically creating a drawing for one of a product and a system from one of the data entered by said user and the result calculated from the data.

3. The design support system according to claim 1, comprising a function of gathering and managing customer information entered by said user.

4. The design support system according to claim 1, comprising a function of managing a condition for designing and a result of designing in a database on a system side.

5. The design support system according to claim 1, comprising a function capable of, when a revision is made to a designing procedure and other processes, specifying and notifying a user who performed a designing affected by said revision.

6. The design support system according to claim 1, wherein authentication is performed for whether or not a connection is allowed to a database server capable of providing information related to performance of a material and a design selecting procedure, based on individual information entered by said user.

7. The design support system according to claim 1, wherein said user is charged in accordance with connection time of said user to the system.

8. The design support system according to claim 1, wherein a user to be charged is discriminated from a user not to be charged.

9. The design support system according to claim 1, wherein
said construction material includes a fender, and
said system displays a list of selectable products based on a calculation result of an amount of energy absorption and a reaction force, and provides a selection process report and a drawing of a performance characteristic for a specific type selected from said list.
